(19) Europäisches Patentamt
European Patent Office
Office européen des brevets

(11) **EP 4 142 514 B1**

(12) **FASCICULE DE BREVET EUROPEEN**

(45) Date de publication et mention de la délivrance du brevet:
**10.04.2024   Bulletin 2024/15**

(21) Numéro de dépôt: **21732408.6**

(22) Date de dépôt: **29.04.2021**

(51) Classification Internationale des Brevets (IPC):
**A23L 15/00** *(2016.01)*    **A23J 1/14** *(2006.01)*
**A23J 3/14** *(2006.01)*    **A23L 29/10** *(2016.01)*
**A23L 29/212** *(2016.01)*    **A23L 33/185** *(2016.01)*
**A23C 9/154** *(2006.01)*    **A23C 9/152** *(2006.01)*
**A23C 9/137** *(2006.01)*    **A23C 9/13** *(2006.01)*
**A23C 19/093** *(2006.01)*

(52) Classification Coopérative des Brevets (CPC):
**A23L 33/185; A23C 9/1315; A23C 9/137;
A23C 9/1526; A23C 9/154; A23C 19/093;
A23J 1/14; A23J 3/14; A23L 15/35; A23L 29/10;
A23L 29/212**

(86) Numéro de dépôt international:
**PCT/FR2021/050748**

(87) Numéro de publication internationale:
**WO 2021/219967 (04.11.2021 Gazette 2021/44)**

(54) **ALTERNATIVE VEGETALE A L'OEUF**

PFLANZENBASIERTE EIALTERNATIVE

PLANT-BASED EGG ALTERNATIVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **30.04.2020   FR 2004338**

(43) Date de publication de la demande:
**08.03.2023   Bulletin 2023/10**

(73) Titulaire: **ROQUETTE FRERES**
**62136 Lestrem (FR)**

(72) Inventeurs:
• **DEDIEU, Géraldine**
  **62136 Lestrem (FR)**
• **SARRAZIN, Florian**
  **62232 Fouquereuil (FR)**

(74) Mandataire: **Plasseraud IP**
**66, rue de la Chaussée d'Antin**
**75440 Paris Cedex 09 (FR)**

(56) Documents cités:
**WO-A1-2013/067453    WO-A1-2014/001016
WO-A1-2014/001030    WO-A1-2018/197822**

## Description

### Domaine technique

La présente invention concerne un substitut d'oeuf et son procédé de fabrication, ainsi que les compositions comprenant ledit substitut d'oeuf, principalement dédiées à l'industrie des sauces alimentaires, plus particulièrement la mayonnaise.

### Technique antérieure

Les oeufs sont des aliments bien connus de l'industrie alimentaire. Le marché des ingrédients d'oeufs a été estimé à 6 milliards de dollars américains à l'échelle mondiale, et continue de croître. Les oeufs sont de haute valeur nutritive, et donc une composante essentielle d'une large gamme de produits alimentaires, allant, mais sans s'y limiter des pains, gâteaux, biscuits, tels que les muffins ou scones, soufflés, pâtes, sauces, crèmes pâtissières et à la crème glacée.

Toutefois, les oeufs possèdent un certain nombre d'inconvénients. Ils contiennent des taux élevés de cholestérol et de graisses saturées, ce qui augmente le risque de maladies cardio-vasculaires et l'obésité. D'autres consommateurs souhaitent éviter la consommation de produits à base d'oeufs en raison d'allergies alimentaires ou d'autres restrictions alimentaires. Enfin certains consommateurs ne veulent pas manger d'oeufs pour des raisons religieuses ou éthiques. De plus, la qualité microbiologique des oeufs est parfois insuffisante dans plusieurs pays (p.e. en Russie).

Pour remédier à ces problèmes, la recherche agroalimentaire travaille depuis de nombreuses années sur des alternatives végétales aux oeufs. Cette alternative doit être respectueuse de l'environnement et de réponse allergénique basse afin de pouvoir efficacement répondre à ces enjeux. Les solutions basées sur le soja sont donc à proscrire.

Des solutions comme celles divulguées dans les demandes de brevet WO2014001016 (divulguant une émulsion contenant un amidon gélatinisé, une albumine de graine de légumineuse et un polysaccharide non amylacé de faible densité de charge) ou WO2014001030 (divulguant une émulsion contenant un amidon gélatinisé, une albumine de graine de légumineuse et un épaississant polysaccharide) existent mais elles mettent en oeuvre des formulations complexes, contenant plus de deux composés. Les polysaccharides non amylacés qu'elles utilisent sont d'ailleurs un handicap pour certains consommateurs qui souhaitent une liste d'ingredients simplifiée, impliquant un nombre le plus bas possible de composés.

On peut citer la demande de brevet WO2013067453 qui propose des compositions multifonctionnelles qui peuvent être utilisés comme substitut d'oeuf entier. Dans un aspect préféré, la composition enseignée dans ce document comprend (i) de la farine de pois jaunes, et (ii) un amidon modifié dans un rapport en poids allant de 7:3 à 3:7, et dans laquelle la composition fournit la pouvoir liant, le pouvoir humectant, d'agent de levage, et / ou des propriétés émulsifiantes similaires à un oeuf. En particulier, les exemples 7, 8 et 9 de cette demande présentent un mélange de protéine de pois et d'amidon modifié visant à remplacer le jaune d'oeuf dans les mayonnaises.

Pour être performant, il est recommandé de réhydrater la protéine jusqu'à 24h dans de l'eau avant utilisation. La figure 11 de cette demande montre bien l'impact de cette hydratation. En effet, après une heure d'hydratation, la fermeté de la mayonnaise (mesurée par la distance parcourue à l'aide d'un consistomêtre) est similaire à la mayonnaise obtenue sans hydratation. Il faut selon cette figure au moins 3 heures d'hydratation pour commencer à voir une texture plus ferme (distance moins longue). Cette hydratation est une étape supplémentaire qui inflige un cout supplémentaire aux utilisateurs de ces solutions. C'est donc un frein important à son utilisation et à des coûts de produits finis compétitifs. De plus, de l'eau supplémentaire est utilisée. Enfin, un temps d'attente en milieu hydraté reste un risque majeur de contamination microbiologique en agroalimentaire.

Il est du mérite de la demanderesse d'avoir travaillé à répondre à ces problématiques. Ces travaux ont aboutis à la composition selon l'invention caractérisée en ce qu'elle comprend une albumine de légumineuse, préférentiellement choisie dans une liste comprenant le pois et la féverole, et un amidon pré-gélatinisé dans un ratio respectif en poids compris entre 0,9/0,1 et 0,6/0,4, préférentiellement compris entre 0,8/0,2 et 0,7/0,3, encore plus préférentiellement 0,75/0,25. L'invention consiste également en le procédé de fabrication de la composition selon l'invention ainsi que ses diverses utilisations industrielles.

L'invention sera mieux comprise à l'aide de la description suivante.

### Résumé de l'invention

L'invention s'incarne tout d'abord dans une composition comprenant une albumine de légumineuse et un amidon pré-gélatinisé dans un ratio respectif en poids compris entre 0,9/0,1 et 0,6/0,4, préférentiellement compris entre 0,8/0,2 et 0,7/0,3, encore plus préférentiellement 0,75/0,25, et ne comprenant pas de polysaccharide non amylacé.

L'invention consiste également en un procédé de fabrication de la composition comprenant les étapes suivantes :

- Fourniture d'une albumine de légumineuse,

- Fourniture d'un amidon pré-gélatinisé

- Mélange des deux composés.

Enfin l'invention consiste également en l'utilisation de la composition comprenant une albumine de légumineuse et un amidon pré-gélatinisé selon l'invention, dans le domaine de l'alimentation humaine ou animale.

L'invention sera mieux comprise à l'aide de la description détaillée qui suit.

## Description détaillée de l'invention

L'invention s'incarne tout d'abord dans une composition comprenant une albumine de légumineuse et un amidon pré-gélatinisé dans un ratio respectif en poids compris entre 0,9/0,1 et 0,6/0,4, préférentiellement compris entre 0,8/0,2 et 0,7/0,3, encore plus préférentiellement 0,75/0,25, et ne comprenant pas de polysaccharide non amylacé.

Par « ratio » on doit comprendre les proportions respectives en poids de chaque constituant (*i.e.* albumine et amidon). Pour mieux comprendre, le ratio 1/0 s'entend par une composition comprenant uniquement de l'albumine et le ratio 0,5/0,5 comme comprenant moitié/moitié d'albumine et d'amidon.

L'utilisation d'une albumine de légumineuse, préférentiellement de pois ou de féverole, comme il sera exemplifié ci-dessous, donne un avantage compétitif décisif au producteur alimentaire désirant remplacer ses jaunes d'oeufs. La solution divulguée par la demande de brevet WO2013/067453 est une composition comprenant de la farine de pois jaune et un amidon modifié dans un ratio en poids compris entre 7 :3 et 3 :7 (cf. paragraphe 15). On comprend par les exemples 7 et 8 que la farine de pois jaune est préférentiellement un isolat de pois jaune à 80% de protéines, vraisemblablement la fraction globuline commercialisée sous les marques EMPRO® ou NUTRALYS®. L'amidon modifié préféré est un amidon pré-gélatinisé. Les ratios préférés sont dans ce cas 50/50 ou 59/41. La figure 11 nous montre qu'une hydratation minimale de 3h est nécessaire avant d'avoir une consistance plus dure, se rapprochant de celle obtenue avec un jaune d'oeuf.

Dans le cadre de ce produit, il est clairement décrit qu'une réhydratation est nécessaire avant utilisation, le paragraphe 156 de cette demande précisant que celle-ci est de 24h. La figure 11 nous montre qu'une hydratation minimale de 3h est nécessaire avant d'avoir une consistance plus dure, se rapprochant de celle obtenue avec un jaune d'oeuf.

Cette réhydratation dans le cadre de notre invention, qui diffère par la sélection d'une albumine de légumineuse, préférentiellement de pois ou de féverole, et par le ratio plus haut en protéine, permet l'obtention d'un résultat identique au jaune d'oeuf avec une réhydratation préalable de l'albumine maximale de 15 min. Cet avantage est décisif pour le producteur de mayonnaise par exemple, un temps de réhydratation de 3h voire 24h est handicapant tant techniquement que financièrement.

Le terme « protéine » doit se comprendre dans la présente demande comme les macromolécules formées d'une ou de plusieurs chaînes polypeptidiques constituées de l'enchaînement de résidus d'acides aminés liés entre eux par des liaisons peptidiques. Dans le cadre particulier des protéines de pois, les protéines sont plus particulièrement constituées des globulines (environ 50-60% des protéines du pois) et des albumines (20-25%). Dans le cadre particulier de la présente invention, on comprendra par protéines les albumines de pois. Les protéines au sens de l'invention sont isolées des autres composantes de la source végétale dont elles sont extraites, tels que l'amidon et les fibres. De manière préférée, on entendra par protéines des concentrats protéiques ou des isolats protéiques avec une teneur respective en protéine d'au moins 50% et 70% sur matière sèche.

Par « albumine », on entend dans la présente demande la famille de protéines étant solubles dans l'eau et moyennement solubles dans les solutions salines. On peut identifier les albumines présentes dans un mélange par électrophorèse ou chromatographie. Une méthode préférée est décrite dans l'article « Peptide and protein molecular weight détermination by electrophoresis using a high-molarity tris buffer system without urea. » (Fling SP, Gregerson DS, Anal. Biochem. 1986;155:83-88). Les albumines dans la présente invention sont préférentiellement extraites de légumineuses, encore plus préférentiellement de pois ou de féverole. Une albumine de pois particulièrement d'intérêt est par exemple extraite lors du procédé de fractionnement aqueux des différents constituants du pois, avec élimination des fibres, de l'amidon et des protéines de type globulines (voir par exemple les demandes de brevet EP1400537 et EP3614856 de la demanderesse).

Par « légumineuse », on comprendra dans la présente demande la famille de plantes dicotylédones de l'ordre des *Fabales.* C'est l'une des plus importantes familles de plantes à fleurs, la troisième après les *Orchidaceae* et les *Asteraceae* par le nombre d'espèces. Elle compte environ 765 genres regroupant plus de 19 500 espèces. Plusieurs légumineuses sont d'importantes plantes cultivées parmi lesquelles le soja, les haricots, les pois, le pois chiche, la féverole, l'arachide, la lentille cultivée, la luzerne cultivée, différents trèfles, les fèves, le caroubier, la réglisse, le lupin. Dans la présente invention, par légumineuse, on comprendra plus particulièrement le pois ou la féverole.

Selon un mode préféré de l'invention, la composition selon l'invention comprend une albumine de légumineuse, la légumineuse étant choisie dans une liste comprenant le pois et la féverole, préférentiellement le pois.

Le terme « pois » étant ici considéré dans son acception la plus large et incluant en particulier toutes les variétés de « pois lisse » (« smooth pea ») et « de pois ridés » (« wrinkled pea »), et toutes les variétés mutantes de « pois lisse » et de « pois ridé » et ce, quelles que soient les utilisations auxquelles on destine généralement lesdites variétés (alimentation humaine, nutrition animale et/ou autres utilisations). Ce terme « pois » dans la présente demande inclut les variétés de pois appartenant au genre Pisum et plus particulièrement aux espèces sativum et aestivum. Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87.

Par « féverole », on entend le groupe des plantes annuelles de l'espèce *Vicia faba,* appartenant au groupe des légumineuses de la famille des Fabaceae, sous-famille des Faboideae, tribu des Fabeae. On distingue les variétés Minor et Major. Dans la présente invention, les variétés sauvages et celles obtenues par génie génétique ou sélection variétales sont toutes d'excellentes sources.

Par « amidon pré-gélatinisé » on entend dans la présente invention un amidon modifié par un traitement physique, mécanique et/ou chimique, préférentiellement physique, qui lui confère l'aptitude de développer de la viscosité lorsqu'il est ajouté à froid à une formulation liquide.

On entend au sens de l'invention par « amidon prégélatinisé » un amidon rendu « hydrosoluble », c'est-à-dire un amidon présentant à 20°C et sous agitation mécanique pendant 24 heures une fraction soluble dans de l'eau déminéralisée au moins égale à 5 % en poids. Cette fraction soluble est de préférence supérieure à 20 % en poids, ou plus préférentiellement supérieure à 50 % en poids, ou tout préférentiellement supérieure ou égale à 70%. Bien entendu, l'amidon hydrosoluble peut être totalement soluble dans l'eau déminéralisée, la fraction soluble étant alors supérieure à 90%, et pouvant être proche à 100 %.

L'amidon hydrosoluble présente de préférence avec une faible teneur en eau, généralement inférieure à 10 %, notamment inférieure à 5% en poids.

De tels amidons présentent généralement un taux de cristallinité en amidon inférieur à 15 %, généralement inférieur à 5 % et le plus souvent inférieur à 1 %, voire nul. A titre d'exemple, on peut citer les produits fabriqués et commercialisés par la Demanderesse sous le nom de marque PREGEFLO®.

L'amidon prégélatinisé peut également consister en un amidon qui a conservé partiellement sa forme granulaire d'origine, obtenu par cuisson atomisation, généralement connu sous l'appellation d'amidon GCWS (Granular Cold Water Soluble).

Les amidons prégélatinisés sont généralement préparés par des techniques thermiques, chimiques ou mécaniques susceptibles d'engendrer un simple gonflement, un éclatement partiel, voire une solubilisation complète des granules d'amidons de façon à ce qu'ils deviennent solubles dans l'eau selon un procédé dit à froid, c'est-à-dire par dispersion dans l'eau à une température d'eau inférieure à 45°C, préférentiellement inférieure à 35°C et encore plus préférentiellement voisine de la température ambiante, soit 20°C +/- 5°c.

La source de l'amidon est choisie dans toute source actuellement disponible et incluant les amidons prégélatinisés dérivés du maïs, de pomme de terre, du blé, du riz, du pois, de l'avoine, de lentilles, de féveroles, de fèves , de haricots, de pois chiches, ou des combinaisons de ceux-ci.

Le traitement de modification préféré est un chauffage de l'amidon avant séchage, réalisé de manière préférentielle sur un tambour sécheur, par atomisation ou bien par extrusion, encore plus préférentiellement par passage sur un tambour sécheur. On sait que la gélatinisation de l'amidon s'effectue par rupture des granules d'amidon sous l'action combinée de l'humidité, la température et la pression. Un amidon prégélatinisé présente l'avantage d'être dispersable dans l'eau froide, ce qui permet par exemple son utilisation dans des préparations alimentaires instantanées. Ces amidons sont bien connus de l'art antérieur. Les techniques préférées d'obtention d'un amidon prégélatinisé sont des techniques de cuisson/séchage de suspensions d'amidon en milieu aqueux comme notamment l'atomisation, la cuisson sur tambour ou l'extrusion. L'autoclavage ou le chauffage indirect sur échangeur de chaleur sont des procédés de cuisson également possibles et tendent à produire des dispersions colloïdales complexes consistant en granules intacts, fragmentés et gonflés. On trouvera des exemples de procédé de préparation de tels amidons dans les documents US 3,086,890, US 3,607,394 ou encore FR 2 822 471.

De préférence, cet amidon prégélatinisé est issu d'un un amidon waxy, c'est-à-dire riche en amylopectine et pauvre en amylose. Il peut s'agir notamment d'un amidon waxy de maïs, de pomme de terre ou de riz, préférentiellement waxy de maïs.

Cet amidon prégélatinisé peut être ou non modifié avant ou après l'application du traitement de cuisson/séchage décrit plus haut. En termes de modification, il peut s'agir d'une ou plusieurs modification(s) par voie physique, voie physico-chimique, voie chimique ou voie enzymatique. Il peut notamment s'agir d'un traitement de dextrinification, d'hydrolyse acide ou enzymatique, de carboxyméthylation, d'hydoxypropylation, d'hydroxyéthylalion, d'acétylation, d'octénylsuccinylation, de cationisation, de réticulation, de greffage. De préférence l'amidon prégélatinisé est choisi parmi les amidons modifiés, notamment dextrinifiés, hydrolysés, carboxyméthylés, hydroxypropylés, acétylés, octénylsuccinates ou cationiques, prégélatinisés. Plus préférentiellement l'amidon prégélatinisé est choisi parmi les amidons carboxyméthylés, hydroxypropylés, acétylés, octénylsuccinates, prégélatinisés.

De manière préférée, l'amidon prégélatinisé selon l'invention est issu d'un amidon waxy de maïs et a subi une modification chimique d'acétylation.

En particulier, on préfère les amidons prégélatinisés non ioniques et notamment ceux de la gamme commercialisée par la Demanderesse sous la marque PREGEFLO®. Des exemples de tels amidons les plus préférés sont par exemple le PREGEFLO® CH 40.

Par « polysaccharide non amylacé », on entend dans la présente demande les polymères appartenant à la famille des glucides à l'exclusion des amidons, amylose, amylopectine & leurs mélanges. Les oses constituants ces « polysaccharides non amylacés » ne contiennent pas exclusivement du glucose et les liaisons osidiques ne sont pas exclusivement des liaisons alpha1,4 et/ou alpha 1,6. De manière non limitative, de tels polysaccharides non amylacés sont par exemple les pectines, les gommes de xanthane, l'alginate ou l'agar-agar.

Selon un mode de réalisation préféré, l'albumine de légumineuse selon l'invention possède une activité émulsifiante supérieure à 600 ml d'huile de maïs par gramme d'albumine, préférentiellement supérieure à 800ml d'huile de maïs par gramme d'albumine, encore plus préférentiellement supérieure à 1000ml d'huile de maïs par gramme d'albumine.

De manière préférée, l'albumine de légumineuse selon l'invention est une albumine de pois.

L'activité émulsifiante est définie comme la quantité maximale d'huile pouvant être dispersée dans une solution aqueuse contenant une quantité définie d'émulsifiant avant rupture ou inversion de phase de l'émulsion (Sherman, 1995). Afin de la quantifier, la Demanderesse a développé un test permettant de la quantifier aisément, rapidement et de manière reproductible.

- 0,2g d'échantillon du produit est dispersé dans 20ml d'eau

- La solution est homogénéisée avec un appareil Ultraturax IKA T25 pendant 30 sec à une vitesse de 9500 rpm

- Ajout de 20ml d'huile de maïs sous homogénéisation dans les mêmes conditions que l'étape 2 précédente.

- Centrifugation 5 minutes à 3100g

    ◦ Si on obtient une bonne émulsion, on recommence le test au point 1 en augmentant les quantités d'eau et d'huile de maïs de 50%.

    ◦ Si on obtient une mauvaise émulsion (déphasage), on recommence le test au point 1 en diminuant les quantités d'eau et d'huile de maïs de 50%.

- La quantité maximale d'huile (Qmax en ml) pouvant être émulsifiée est ainsi déterminée de manière itérative.

- La capacité émulsifiante est donc la quantité maximale d'huile de maïs pouvant être émulsifiée par grammes de produit.

    ◦

$$\text{Capacité émulsifiante} = (Q_{max} / 0,2)*100$$

De manière préférée la richesse en protéine de l'albumine est supérieure à 70%, préférentiellement supérieure à 80%, encore plus préférentiellement comprise entre 80% et 90%, l'optimum étant compris entre 82% et 88%. Cette richesse se calcule par rapport à la matière sèche. La richesse en protéine est obtenue par toute méthode bien connue par l'homme du métier, et en particulier en dosant la teneur en azote (par Dumas ou Kjehldal) et en la multipliant par le coefficient 6,25.

De manière préférée, la matière sèche de l'albumine est supérieure à 80%, préférentiellement supérieure à 85%, encore plus préférentiellement supérieure à 90%, l'optimum étant compris entre 95% et 98%.

Un procédé particulièrement adapté pour extraire et produire cette albumine de pois est décrit dans la demande de brevet de la Demanderesse EP3614856. Ce procédé consiste en une succession d'étapes permettant d'éliminer amidons, fibres internes et globulines de la farine de pois. La fraction soluble ainsi obtenue va subir une centrifugation ou une microfiltration. Le surnageant ou le perméat va ensuite être ultrafiltré afin de concentrer les albumines de haut poids (PA2) dans le retentât (dans le perméat on retrouvera les sels, les sucres et les albumines de faibles poids moléculaire type Pa1b). On rectifie alors le pH du retentât entre 6,5 et 7,5, puis on lui fait subir un traitement thermique compris entre 130°c et 150°C, préférentiellement de 140°C, avec un temps de traitement compris entre 5 et 15 secondes, préférentiellement de 10 secondes.

De manière préféré, la composition selon l'invention consiste en une albumine de légumineuse et un amidon pré-gélatinisé dans un ratio respectif en poids compris entre 0,9/0,1 et 0,6/0,4, préférentiellement compris entre 0,8/0,2 et 0,7/0,3, encore plus préférentiellement 0,75/0,25. Cette composition ne contient avantageusement que ces deux composés.

L'invention consiste également en un Procédé de fabrication de la composition selon l'invention comprenant les étapes suivantes :

- Fourniture d'une albumine de légumineuse,

- Fourniture d'un amidon pré-gélatinisé

- Mélange des deux composés.

La première étape consiste en la fourniture d'une albumine de légumineuse. Selon un mode réalisation préféré, l'albumine de légumineuse est choisie dans une liste comprenant le pois et la féverole, de préférence le pois.

Toute source commerciale est possible, ainsi que toute production résultant de la mise en oeuvre d'un enseignement public p.e. d'un article ou d'un brevet. Les procédés décrits dans les demandes de brevet EP1400537 et EP3614856 sont particulièrement adaptées.

L'albumine peut être fournie de manière liquide ou solide, de manière indifférenciée. Il est nécessaire d'avoir un produit compatible avec les requis de l'industrie alimentaire et/ou pharmaceutique.

La seconde étape consiste en la fourniture d'un amidon pré-gélatinisé.

Toute source commerciale est possible, ainsi que toute production résultant de la mise en oeuvre d'un enseignement public p.e. d'un article ou d'un brevet. Un procédé particulier consiste à extraire un amidon de maïs waxy, en lui faisant subir une réaction d'acétylation puis en passant l'amidon waxy modifié sur un tabour sécheur afin de le prégélatiniser. Les amidons commerciaux CLEARAM CH 40® de la société ROQUETTE sont particulièrement adaptés.

La troisième étape consiste en un mélange des deux composés, albumine et amidon. Selon un mode de réalisation particulier, ce mélange comporte l'ajout de composés autres que l'albumine de légumineuse et l'amidon pré-gélatinisé. Ces composés peuvent être de manière non-limitatives des colorants, notamment du bêta-carotène, des arômes ou modificateurs d'arômes, des agents pH, notamment des tampons ou réactifs, des lipides.

Le mélange est réalisé à l'aide d'installations bien connues par l'homme du métier, notamment des cuveries, pompes, agitations, balances. L'installation est choisie suivant que les composés soient sous forme solide ou liquide.

Dans le cadre de produit solides, un appareillage permettant une homogénéisation des poudres, type mélangeur à tambours, mélangeur convectif, mélangeur à lit fluidisé ou mélangeur statique, sont requis.

Dans le cadre de produits liquides, une cuverie équipée d'un agitateur est suffisante. L'utilisation d'un homogénéisateur ainsi que d'un système de chauffage est cependant possible.

Selon un mode de réalisation particulier, la troisième étape du procédé selon l'invention est réalisée en milieu liquide, après réhydratation de l'albumine avec un temps inférieur ou égal à 15 min. De manière préférée, l'albumine est réhydratée avant mélange avec de l'eau de qualité alimentaire p.e. décarbonatée, du robinet, déminéralisée, ou distillée. De manière surprenante par rapport à l'art antérieur (globulines de pois utilisée dans les exemples 7, 8 et 9 de la demande de brevet WO2013067453), le temps de réhydratation est beaucoup plus court, de l'ordre de15 min, tout en procurant un effet maximal.

Selon un mode de réalisation particulier, le procédé selon l'invention comporte une étape finale supplémentaire de traitement de la composition obtenue, notamment aux fins de son utilisation et/ou de sa commercialisation.

A titre d'exemples de traitements de cette étape supplémentaire, la composition peut-être concentrée, séchée, ou stérilisée aux fins d'être stockée et/ou vendue.

La composition peut également être directement utilisée dans toute composition à destination d'application industrielle, préférentiellement alimentaire.

Enfin l'invention consiste également en l'utilisation de la composition selon l'invention comprenant une albumine de légumineuse, et un amidon pré-gélatinisé, dans le domaine de l'alimentation humaine ou animale.

Selon un mode de réalisation préféré, l'utilisation selon l'invention est faite dans les applications en remplacement de l'œuf, préférentiellement du jaune d'oeuf.

Plus particulièrement, l'invention concerne l'utilisation de la composition selon l'invention dans des formulations nutritionnelles telles que:

- les boissons, notamment par le biais de mélanges de poudres à reconstituer, notamment pour la nutrition diététique (sport, minceur), boissons prêtes-a-boire pour la nutrition diététique ou clinique, liquides pour la nutrition clinique tels que les boissons ou poches entérales, boissons végétales,

- les laits fermentés de type yaourts, tels que les yaourts brassés, à la grecque, ou yaourts à boire,

- les crèmes végétales, telles que la crème pour café ou « coffee whitener », crèmes desserts, desserts glaces ou sorbets.

- les biscuits, muffins, pancakes, barres nutritionnelles, notamment destinées à la nutrition spécialisée minceur ou pour les sportifs, pains, notamment les pains sans gluten enrichis en protéines, céréales hyper protéinées, obtenues par cuisson extrusion (« crisps » pour inclusion, céréales petit déjeuner, « snacks »),

- les fromages,

- les analogues de viandes, analogues de poissons,

- les sauces, notamment la mayonnaise.

Selon un mode de réalisation particulier, l'utilisation selon l'invention concerne les recettes de mayonnaises véganes, avec absence totale de composés provenant de l'œuf ou du lait.

Par « végane », on entend le fait d'être exempt de produit d'origine animale.

L'invention sera mieux comprise à l'aide des exemples non-limitatifs suivants.

**Exemples**

Exemple 1 : préparation d'une albumine de pois

La première étape est l'obtention de la fraction soluble du pois. De la farine de pois est initialement préparée par broyage de pois fourragers décortiqués sur broyeur à marteaux de type ALPINE équipé d'une grille de 100 pm. 300 kg de farine à 87% de matière sèche sont ensuite mis à tremper dans de l'eau à la concentration finale de 25% sur sec, à un pH de 6,5. 1044 kg de suspension de farine à 25% de matière sèche (soit donc 261 kg de farine sèche) sont alors introduits avec 500 kg d'eau dans une batterie d'hydrocyclones composée de 14 étages. Elle est alimentée par la suspension de farine à l'étage n° 5. Cette séparation conduit à l'obtention d'une phase légère qui correspond à la sortie de l'étage n° 1. Elle est constituée du mélange protéines, fibres internes et solubles.

Cette phase légère en sortie d'hydrocyclones renferme en mélange (142 kg sur sec au total) : les fibres (environ 14,8% en poids, soit 21 kg sec), les protéines (environ 42,8% en poids, soit 60,8 kg sec) et les solubles (environ 42,4% en poids, soit 60,2 kg sec). Cette fraction présente une matière sèche de 11,4 %. On procède à la séparation des fibres sur décanteurs centrifuges de type WESTFALIA employés dans une unité industrielle féculière de traitement de la pomme de terre. La phase légère en sortie de décanteur centrifuge renferme un mélange de protéines et de solubles, tandis que la phase lourde renferme les fibres de pois. La phase lourde renferme 105 kg de fibres à 20 % de matière sèche. On constate que la quasitotalité des fibres est bien retrouvée dans cette fraction.

Quant à la fraction protéines et solubles, elle renferme 1142 kg d'un mélange en solution de solubles et de protéines (fraction à 6 % de matière sèche). On procède à la floculation des protéines à leur point isoélectrique par ajustement de la phase légère en sortie de décanteur centrifuge à un pH de 4,5 et chauffage à 50 °C.

Les protéines ainsi mises à floculer sont laissées 10 minutes en cuve de maturation. Après précipitation des protéines, on procède à une décantation centrifuge, qui permet de récupérer, après séchage, du sédiment renfermant 56 kg de protéines type globulines (86 % de Nx6,25 sur sec) à 93 % de matière sèche et une fraction soluble contenant albumines, sucres et sels, titrant 2,5g pour 100g en M.S. dont 27% de protéines.

La fraction soluble de pois ainsi obtenue est tout d'abord dégazée par un passage sur un module SPX DEROX. Les paramètres de pilotage dudit module SPX DEROX sont les suivants :

[Tableau 1]

| | | |
|---|---|---|
| Pression alimentation | bar | 0,88 |
| Pression sortie | bar | 2,73 |
| T°C alimentation | °C | 50,5 |
| T°C sortie | °C | 42,8 |
| T°C condenseur | °C | 37 |
| Consigne vide | bar | 0,1 |
| Consigne niveau cuve | % | 60 |
| Débit soutirage vers NA7 | L/H | 750 |
| $O_2$ entrée dissous | mg/L | 9 |
| $O_2$ sortie dissous | mg/L | 0,1 |

On contrôle le bon dégazage par la mesure en entrée et en sortie de l'oxygène dissous.

Puis, cette fraction soluble de pois dégazée est pompée au travers d'une unité de microfiltration équipée de membranes céramiques type Inside Ceram® ayant un seuil de coupure de 0.14 μm (19 canaux de 4.5 mm). Tout au long de la filtration, la température est régulée à 60°C et la pression transmembranaire maintenue à une valeur comprise entre 0.4 et 0.6 bar.

Le perméat est pompé au travers d'une unité d'ultrafiltration. L'unité d'ultrafiltration est équipée de membranes céramiques type KERASEP® BX commercialisées par la société NOVASEP et ayant un seuil de coupure de 15 Kda (7 canaux de 6 mm). Tout au long de la filtration, la température est régulée à 60°C et la pression transmembranaire maintenue à une valeur comprise entre 1 et 3 bars.

On réalise la succession de 3 diafiltrations, consistant en la répétition par 3 fois d'un ajout d'un volume d'eau décarbonatée potabilisée à un volume de retentât suivi d'une ultrafiltration jusqu'à obtention d'une matière sèche du perméat inférieure à 0,5% de M.S.

Le perméat d'ultrafiltration obtenu est alors rectifié sous agitation à pH 6,8 par ajout de soude concentrée à 50%.

Un traitement thermique UHT est ensuite appliqué au perméat d'ultrafiltration neutralisé consistant en un passage sur un module VOMATEC, à une température de 140°C pendant un temps de contact d'une dizaine de secondes puis flashé sous vide à environ 90°C

La solution obtenue en sortie du traitement thermique UHT est enfin atomisée sur une tour d'atomisation type atomiseur simple effet. La consigne de température d'entrée est de 190°C et la température de sortie entre 85 et 90°C.

La poudre d'albumine de pois obtenue est baptisée « albumine de pois ». La composition de celle-ci est donnée dans le tableau ci-dessous :

[Tableau 2]

| | | |
|---|---|---|
| Teneur en matière sèche | 94,4 | % |
| Teneur en protéine (Nx6.25) | 94 | g / 100 g de matière sèche |
| Teneur en cendres | 2,5 | g / 100 g de matière sèche |
| Activité émulsifiante | 1314 | ml d'huile de maïs par g de protéine |

Exemple 2 : Réalisation de mayonnaise classique (jaune d'oeuf) et avec des compositions selon l'art antérieur et selon l'invention

On utilisera entre autres comme ingrédients :

- de l'albumine de pois préparée selon l'exemple 1

- de la globuline de pois NUTRALYS® F85F (Société ROQUETTE)

- un amidon base maïs waxy acétylé et prégélatinisé PREGEFLO® CH40 (société ROQUETTE)

Les formulations des mayonnaises sont les suivantes :

[Tableau 3]

| | Mayonnaise vegane (sans œuf) | Mayonnaise classique à l'oeuf |
|---|---|---|
| Ingrédients pour Phase 1 | | |
| Eau | 10,58g | 10,58g |
| Composition selon l'invention | 0,8g d'albumine de pois et 0,25g de PREGEFLO® CH40 | |
| Composition selon l'art antérieur 1 | 0,52g de NUTRALYS®F85F et 0,52g de PREGEFLO® CH40 | |
| Composition selon l'art antérieur 2 | 0,52g d'albumine de pois et 0,52g de PREGEFLO® CH40 | |
| Jaune d'oeuf | | 5g |
| Ingrédients pour Phase 2 | | |
| Moutarde | 2,5g | |
| Saccharose | 4,5g | |
| Chlorure de sodium | 1g | |
| Sorbate de potassium | 0,12g | |
| Ingrédients pour Phase 3 | | |
| Huile de tournesol | 70g | 65,8g |
| Ingrédients pour Phase 4 | | |
| Vinaigre | 5,5g | |
| Jus de citron | 2,5g | |
| Ingrédients pour Phase 5 | | |
| Huile de tournesol | 2,5g | |
| | | |

Le protocole de préparation à l'aide d'un mélangeur HOTMIX Pro (commercialisé par Vitaeco S.R.L.) est le suivant :

- Phase 1 : dans le bol du HOTMIX Pro, hydrater les compositions avec l'eau pendant un temps défini, vitesse 3 (soit 800 tr/min)

- Phase 2 : Ajouter moutarde, saccharose, chlorure de sodium et sorbate de potassium et mélanger 1 min toujours à vitesse 3

- Phase 3 : ajouter l'huile en fin filet, constamment, pendant environ 2 min à vitesse 3

- Phase 4 : ajouter vinaigre et jus de citron, toujours à vitesse 3

- Phase 5 : Finaliser par ajout du reste de l'huile toujours à vitesse 3

- Finir en agitant à vitesse 3 pendant 1 min

Pour la phase 1, le temps de réhydratation des protéines est de 15 min.

Exemple 3 : comparaisons des différentes compositions dans une mayonnaise

On compare les mayonnaises avec les analyses suivantes

- Taille et stabilité de l'émulsion à l'aide d'un granulomètre laser MALVERN Mastersizer 3000. Le produit est dispersé dans de l'eau osmosée du bol du granulomètre laser et agité à 1900 tr/min. L'analyse est réalisée après une journée. Les paramètres de l'analyse sont : obscuration entre 5% et 10%, optical model à 1,4+0,01i, 3 mesures moyennées. On obtient les valeurs de Dmode, D4.3, D3.2 D90, D10 et D50. Le D3.2 est un excellent indicateur de stabilité de l'émulsion : plus il est petit, plus l'émulsion est stable.

- Texture de l'émulsion. L'appareil utilisé est le texturomètre TAXT2 de la société STABLE MICRO SYSTEMS LTD. On l'équipera de son « Back extrusion RIG 45mm DISC ». Les paramètres utilisés sont les suivants : mode compression, vitesse pré-test 1 mm/sec, vitesse test 1 mm/sec, vitesse post test 10 mm/sec, mode cible distance, distance 30 mm, trigger type auto, trigger force 10G, mode arrêt off. On obtient une mesure de la force (en G) nécessaire pour pénétrer la mayonnaise : plus cette mesure est élevée plus la mayonnaise est ferme.

Les résultats obtenus sont les suivants

[Tableau 4]

|  | Force (en G) | D3.2 (en microns) |
|---|---|---|
| Mayonnaise selon l'invention | 707,2 | 4,25 |
| Mayonnaise selon art antérieur 1 (utilisation de globuline) | 488,7 | 27,5 |
| Mayonnaise selon l'art antérieur 2 (ratio en poids protéine/amidon de 0,5/0,5) | 585,2 | 2,76 |
| Mayonnaise commerciale AMORA | 741,8 | 6,22 |

On voit par ces résultats que seule l'invention possède :

- Une fermeté en G supérieure à 700, et donc similaire à la mayonnaise d'oeuf

- Et une stabilité de son émulsion inférieure à 10 microns

C'est la combinaison du choix de la protéine, une albumine de pois, et du ratio pratiqué qui permet l'obtention de ces résultats uniques.
La composition selon l'invention présente un avantage indéniable en obtenant un résultat identique au jaune d'oeuf, et en limitant la phase de réhydratation à 15min.

## Revendications

1. Composition comprenant une albumine de légumineuse et un amidon pré-gélatinisé dans un ratio respectif en poids compris entre 0,9/0,1 et 0,6/0,4, préférentiellement compris entre 0,8/0,2 et 0,7/0,3, encore plus préférentiellement 0,75/0,25, et ne comprenant pas de polysaccharide non amylacé.

2. Composition selon la revendication 1, dans laquelle la légumineuse est choisie dans une liste comprenant le pois et la féverole.

3. Composition selon l'une des revendications 1 ou 2, dans laquelle la légumineuse est le pois.

4. Composition selon l'une des revendications 1 à 3, dans laquelle l'albumine possède une activité émulsifiante supérieure à 600 ml d'huile de maïs par gramme d'albumine, préférentiellement supérieure à 800ml d'huile de maïs par gramme d'albumine, encore plus préférentiellement supérieure à 1000ml d'huile de maïs par gramme d'albumine

5. Composition selon l'une des revendications 1 à 4, dans laquelle l'amidon pré-gélatinisé est issu d'un amidon waxy de maïs et a subi une modification chimique d'acétylation

**6.** Procédé de fabrication de la composition selon l'une des revendications 1 à 5 comprenant les étapes suivantes :

> 1. Fourniture d'une albumine de légumineuse,
> 2. Fourniture d'un amidon pré-gélatinisé
> 3. Mélange des deux composés.

**7.** Procédé selon la revendication 6, dans lequel la légumineuse est choisie dans une liste comprenant le pois et la féverole.

**8.** Procédé selon l'une des revendications 6 ou 7, dans lequel la légumineuse est le pois.

**9.** Procédé selon les revendications 6 à 8 dans lequel l'étape trois est réalisée en milieu liquide, après réhydratation de l'albumine avec un temps inférieur ou égal à 15 min.

**10.** Procédé selon l'une des revendications 6 à 9 dans lequel le mélange de l'étape 3 comporte l'ajout de composés autres que l'albumine de légumineuse et l'amidon pré-gélatinisé.

**11.** Procédé selon l'une des revendications 6 à 10 comportant une étape finale supplémentaire de traitement de la composition obtenue.

**12.** Utilisation de la composition selon l'une des revendications 1 à 5 dans le domaine de l'alimentation humaine ou animale.

**13.** Utilisation selon la revendication 12 dans les applications en remplacement de l'œuf, préférentiellement dans les applications en remplacement du jaune d'oeuf.

**14.** Utilisation selon l'une des revendications 12 ou 13 dans :

> - les boissons, notamment les boissons pour la nutrition diététique ou clinique, les boissons ou les poches entérales, les boissons végétales,
> - les laits fermentés de type yaourts,
> - les crèmes végétales,
> - les crèmes desserts,
> - les desserts glacés ou sorbets,
> - les biscuits, muffins, pancakes,
> - les barres nutritionnelles destinées à la nutrition diététique
> - les pains,
> - les céréales hyperprotéinées.
> - les fromages,.
> - les analogues de viandes,
> - les analogues de poissons,
> - les sauces, en particulier la mayonnaise.

**15.** Utilisation selon l'une des revendications 12 ou 13 dans les recettes de mayonnaises véganes, avec absence totale de composés provenant de l'œuf ou du lait.

**Patentansprüche**

**1.** Zusammensetzung, die ein Leguminosenalbumin und eine vorgelatinierte Stärke in einem jeweiligen Gewichtsverhältnis zwischen 0,9/0,1 und 0,6/0,4, bevorzugt zwischen 0,8/0,2 und 0,7/0,3, stärker bevorzugt 0,75/0,25, umfasst und kein nichtstärkehaltiges Polysaccharid umfasst.

**2.** Zusammensetzung nach Anspruch 1, wobei die Leguminose aus einer Liste gewählt ist, die Erbsen und Ackerbohnen umfasst.

**3.** Zusammensetzung nach einem der Ansprüche 1 oder 2, wobei die Leguminose Erbse ist.

4. Zusammensetzung nach einem der Ansprüche 1 bis 3, wobei das Albumin eine emulgierende Aktivität von mehr als 600 ml Maisöl pro Gramm Albumin, bevorzugt mehr als 800 ml Maisöl pro Gramm Albumin, stärker bevorzugt mehr als 1000 ml Maisöl pro Gramm Albumin aufweist.

5. Zusammensetzung nach einem der Ansprüche 1 bis 4, wobei die vorgelatinierte Stärke aus einer Waxy-Stärke aus Mais stammt und einer chemischen Modifikation durch Acetylierung unterzogen wurde.

6. Verfahren zur Herstellung der Zusammensetzung nach einem der Ansprüche 1 bis 5, welches die folgenden Schritte umfasst:

    1. Bereitstellung eines Albumins aus Leguminosen,
    2. Bereitstellung einer vorgelatinierten Stärke,
    3. Mischen der beiden Verbindungen.

7. Verfahren nach Anspruch 6, wobei die Leguminose aus einer Liste gewählt wird, die Erbsen und Ackerbohnen umfasst.

8. Verfahren nach einem der Ansprüche 6 oder 7, wobei die Leguminose Erbse ist.

9. Verfahren nach den Ansprüchen 6 bis 8, wobei Schritt drei in flüssigem Medium nach Rehydrierung des Albumins in einem Zeitraum von 15 min oder weniger durchgeführt wird.

10. Verfahren nach einem der Ansprüche 6 bis 9, wobei die Mischung in Schritt 3 die Zugabe von anderen Verbindungen als Leguminosenalbumin und vorgelatinierter Stärke umfasst.

11. Verfahren nach einem der Ansprüche 6 bis 10, umfassend einen zusätzlichen abschließenden Schritt der Verarbeitung der erhaltenen Zusammensetzung.

12. Verwendung der Zusammensetzung nach einem der Ansprüche 1 bis 5 im Bereich der Human- oder Tierernährung.

13. Verwendung nach Anspruch 12 in Anwendungen als Ersatz für Ei, bevorzugt in Anwendungen als Ersatz für Eigelb.

14. Verwendung nach einem der Ansprüche 12 oder 13 in:

    - Getränken, insbesondere Getränken für die diätetische oder klinische Ernährung, enteralen Getränken oder Beuteln, pflanzlichen Getränken,
    - fermentierter Milch vom Typ Joghurt,
    - pflanzlichen Cremes,
    - Dessertcremes,
    - gefrorenen Desserts oder Sorbets,
    - Keksen, Muffins, Pfannkuchen,
    - Ernährungsriegeln für diätetische Ernährung,
    - Broten,
    - proteinreichen Cerealien,
    - Käse,
    - Fleischanaloga,
    - Fischanaloga,
    - Saucen, insbesondere Mayonnaise.

15. Verwendung nach einem der Ansprüche 12 oder 13 in veganen Mayonnaiserezepten mit vollständiger Abwesenheit von Verbindungen aus Ei oder Milch.

**Claims**

1. Acomposition comprising a legume albumin and a pregelatinized starch in a respective weight ratio comprised between 0.9:0.1 and 0.6:0.4, preferentially comprised between 0.8:0.2 and 0.7:0.3, even more preferentially 0.75:0.25, and comprising no non-starch polysaccharide.

**2.** The composition according to claim 1, wherein the legume is selected from a list comprising pea and faba bean.

**3.** The composition according to one of claims 1 or 2, wherein the legume is a pea.

**4.** The composition according to one of claims 1 to 3, wherein the albumin has an emulsifying activity greater than 600 ml of corn oil per gram of albumin, preferentially greater than 800 ml of corn oil per gram of albumin, even more preferentially greater than 1000 ml of corn oil per gram of albumin

**5.** The composition according to one of claims 1 to 4, wherein the pregelatinized starch is obtained from a waxy corn starch and has undergone an acetylation chemical modification

**6.** A method for producing the composition according to one of claims 1 to 5 comprising the following steps:

    1. Provision of a legume albumin,
    2. Provision of a pregelatinized starch
    3. Mixture of the two compounds.

**7.** The method according to claim 6, wherein the legume is selected from a list comprising pea and faba bean.

**8.** The method according to one of claims 6 or 7, wherein the legume is a pea.

**9.** The method according to claims 6 to 8 wherein step three is carried out in a liquid medium, after the albumin has been rehydrated for a time less than or equal to 15 minutes.

**10.** The method according to one of claims 6 to 9 wherein the mixture of step 3 involves adding compounds other than legume albumin and pregelatinized starch.

**11.** The method according to one of claims 6 to 10 comprising a final additional step of treating the obtained composition.

**12.** The use of the composition according to one of claims 1 to 5, in the field of human food or animal feed.

**13.** The use according to claim 12 in the egg substitution applications, preferably in egg yolk substitution applications.

**14.** The use according to one of claims 12 or 13 in:

    - beverages, in particular beverages for dietary or clinical nutrition, enteral beverages or bags, plant beverages,
    - fermented milks such as yogurts,
    - plant creams,
    - dessert creams,
    - frozen desserts or sorbets,
    - biscuits, muffins, pancakes,
    - nutritional bars for dietetic nutrition
    - breads,
    - high-protein cereals.
    - cheeses,.
    - meat analogues,
    - fish analogues,
    - sauces, in particular mayonnaise.

**15.** The use according to one of claims 12 or 13 in vegan mayonnaise recipes, with the total absence of compounds originating from eggs or milk.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014001016 A
- WO 2014001030 A
- WO 2013067453 A
- EP 1400537 A
- EP 3614856 A
- US 3086890 A
- US 3607394 A
- FR 2822471

**Littérature non-brevet citée dans la description**

- **FLING SP ; GREGERSON DS.** Peptide and protein molecular weight détermination by electrophoresis using a high-molarity tris buffer system without urea. *Anal. Biochem.,* 1986, vol. 155, 83-88
- **C-L HEYDLEY et al.** Developing novel pea starches. *Proceedings of the Symposium of the Industrial Biochemistry and Biotechnology Group of the Biochemical Society,* 1996, 77-87